# EUROPÄISCHE PATENTSCHRIFT

(11) **EP 1 270 382 B1**
(45) Veröffentlichungstag und Bekanntmachung des Hinweises auf die Patenterteilung: **30.01.2008**
(21) Anmeldenummer: 02010790.0
(22) Anmeldetag: 15.05.2002
(51) Int. Cl.: B62D 35/02

(54) **Verkleidungsvorrichtung für die Unterseite eines Kraftfahrzeuges und Kraftfahrzeug**
Bottom plate for a motor vehicle
Agencement de bouclier pour le dessous d'un véhicule

(30) Priorität: 23.06.2001 DE 10130358
(43) Veröffentlichungstag der Anmeldung: 02.01.2003
(73) Patentinhaber: Dr.Ing. h.c. F. Porsche Aktiengesellschaft, 70435 Stuttgart (DE)
(72) Erfinder: Kruschhausen, Heinz-Arno, 75446 Wiernsheim (DE); Kiessling, Alexander, 71229 Leonberg (DE)

(56) Entgegenhaltungen:
- EP-A- 0 888 956
- EP-A- 0 891 917
- US-A- 3 776 587

## Beschreibung

Die Erfindung bezieht sich auf ein Kraftfahrzeug mit einer Verkleidungsvorrichtung gemäß Oberbegriff des Anspruchs 1.

Die EP 0 891 917 A1 beschreibt ein gattungsbildendes Kraftfahrzeug mit einer Verkleidungsvorrichtung für dessen Unterseite. Die Verkleidungsvorrichtung besitzt ein Verkleidungsteil, welches über eine Befestigungseinrichtung an der Unterseite des Kraftfahrzeugs gehalten ist. Die Befestigungsvorrichtung umfasst zumindest zwei an dem hinteren Ende des Verkleidungsteils angebrachte Federelemente, die sich quer zur Fahrtrichtung des Fahrzeugs erstrecken und die als Z-förmige Biegungsfedern aus Federstahl hergestellt sind. Die Biegungsfedern sind einerseits über eine Nietverbindung an dem Verkleidungsteil befestigt und andererseits fest mit der Unterseite des Kraftfahrzeugs verbunden. Die Nietverbindung zwischen den Biegungsfedern und dem Verkleidungsteil ist als lose Nietverbindung ausgeführt, bei der ein Niet sowohl die Biegungsfeder als auch das Verkleidungsteil durchsetzt. Dabei ist die Öffnung in dem Verkleidungsteil, die von der Niet durchdrungen wird, wesentlich Größer als die Öffnung in der Biegungsfeder ausgeführt, damit eine Relativbewegung zwischen Biegungsfeder und Verkleidungsteil möglich ist, damit das Verkleidungsteil bei einem Kontakt mit einem auf der Fahrbahn liegenden Gegenstand in Richtung Unterseite des Kraftfahrzeugs ausweichen kann.

Aus der DE 32 39 946 A1 ist eine gattungsgemäße Verkleidungsvorrichtung für die Unterseite eines Kraftfahrzeugs bekannt. Diese Verkleidungsvorrichtung besitzt ein Verkleidungsteil und für das Verkleidungsteil eine Befestigungsvorrichtung, die an der Unterseite, beispielsweise an einer Unterbodengruppe des Fahrzeugs, gehalten ist. Die Befestigungseinrichtung weist mehrere Federelemente auf, die durch Zugfedern gebildet sind, die unter Vorspannung an der Fahrzeugunterseite und an dem Verkleidungsteil eingehängt werden, wobei die Zugrichtung der Zugfeder parallel zur Unterseite verläuft.

Die Verkleidungsvorrichtung kann während der Fahrt des Fahrzeugs störende Geräusche entwickeln.

Es ist daher Aufgabe der Erfindung, ein Kraftfahrzeug mit einer Verkleidungsvorrichtung der eingangs genannten Art zu schaffen, die bei einer Überfahrt über ein Hindernis ausweicht und während des Betriebs des Fahrzeugs keine störende Geräusche verursacht.

Gelöst wird diese Aufgabe mit einem Kraftfahrzeug, das die in Anspruch 1 genannten Merkmale aufweist. Weitere, die Erfindung vorteilhaft ausgestaltende Merkmale sind in den zugehörenden Unteransprüchen angegeben.

Die mit der Erfindung hautsächlich erzielten Vorteile sind darin zu sehen, dass durch das Federelement, dessen Federkräfte etwa rechtwinklig zur Fahrzeugunterseite wirken, die Schwingungsamplitude des Verkleidungsteils während der Fahrt, insbesondere bei hoher Geschwindigkeit, zumindest vermindert werden kann. Somit werden störende Geräusche reduziert, die durch das Schwingen des Verkleidungsteils in einer Luftströmung entstehen können. Es wird weiterhin verhindert, dass das Verkleidungsteil an den Unterboden bzw. die Unterseite des Fahrzeugs schlägt, wodurch Klappergeräusche weitgehend vermieden werden. Beim Einsatz der erfindungsgemäßen Verkleidungsvorrichtung, insbesondere an einem geländegängigen, Kraftfahrzeug kann das Verkleidungsteil beim Überfahren eines Hindernisses durch die Befestigung über das Federelement in Richtung der Fahrzeugunterseite ausweichen, so dass einerseits die Gefahr eines Mitschleppens des Hindernisses und andererseits einer Beschädigung des Verkleidungsteils herabgesetzt wird. Bei weichem Fahrbahnuntergrund, wenn das Fahrzeug einsinkt, ist überdies ein gezieltes Ausweichen des Verkleidungsteils möglich.

Die Erfindung wird nachfolgend anhand von Ausführungsbeispielen mit Bezug auf die Zeichnung näher erläutert.

Es zeigen:
- Fig. 1: eine Ansicht auf die Unterseite eines Kraftfahrzeugs mit einer Verkleidungsvorrichtung, aufweisend eine Befestigungseinrichtung mit dem erfindungsgemäßen Federelement,
- Fig. 2: die Verkleidungsvorrichtung gemäß Fig. 1 in perspektivischer Ansicht und
- Fig. 3-7: jeweils ein Ausführungsbeispiel von zweiten Federelementen einer Befestigungsvorrichtung der Verkleidungsvorrichtung.

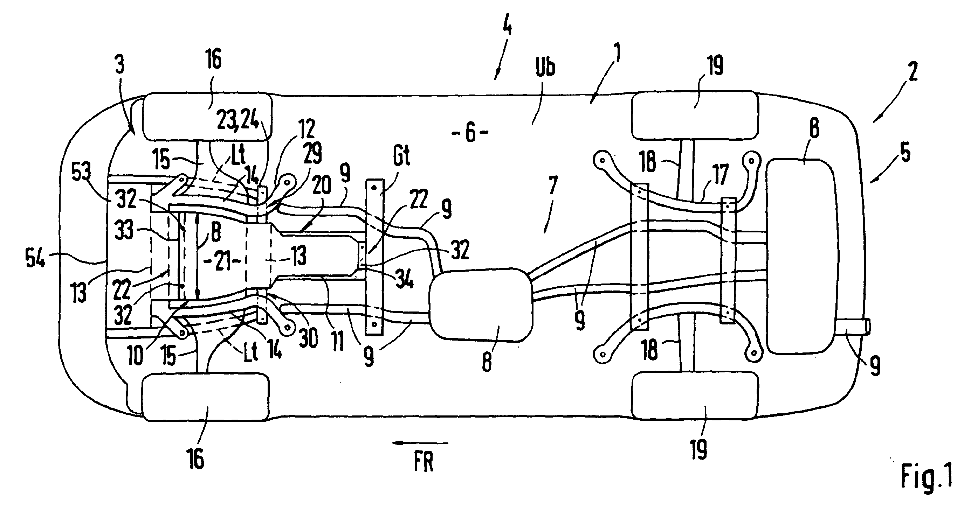

Die Fig. 1 zeigt die Unterseite 1 eines Kraftfahrzeugs 2, welches beispielsweise als Personenkraftwagen ausgebildet ist. Das Kraftfahrzeug 2 ist in bevorzugter Ausführung geländegängig. Es umfasst eine Frontpartie 3, ein Mittelteil 4 sowie eine Heckpartie 5. An der Unterseite 1 ist, insbesondere am Mittelteil 4, eine sog. Bodengruppe 6 angeordnet, die sich bis zur Frontpartie 3 und zur Heckpartie 5 erstrecken kann und einen Unterboden Ub und Rahmenträger aufweist, von denen ausschnittweise lediglich Rahmenlängsträger Lt abgebildet sind. Ferner ist an der Unterseite 1 eine Abgasanlage 7 vorgesehen, die Schalldämpfer 8 und Abgasrohre 9 besitzt. Die - in Fahrtrichtung Fr gesehen - vorderen Abgasrohre 9 führen zu einer in einem Motorraum 10 angeordneten Brennkraftmaschine, die hier nicht näher dargestellt ist. An die Brennkraftmaschine ist ein Getriebe 11 angeflanscht, welches an seinem freien Ende an einem Getriebequerträger Gt befestigt ist, der an der Unterseite 1 angebracht ist. Im Bereich der Frontpartie 3 ist an der Unterseite 1 ein Fahrschemel 12 befestigt, der einen oder mehrere Querträger 13 und beispielsweise zwei Längsträger 14 besitzt, so dass der Fahrschemel 12 - in Draufsicht gesehen - rahmenartig ausgestaltet ist. Der Fahrschemel 12 kann einstückig oder mehrteilig ausgeführt sein. An dem Fahrschemel 12 sind Fahrwerkteile 15 angelenkt, die der Aufnahme von Rädern 16 der Vorderachse dienen. Im Bereich der Heckpartie 5 ist ein weiterer Fahrschemel 17 vorgesehen, der an der Unterseite 1 angeordnet ist. An dem hinteren Fahrschemel 17 sind Fahrwerkteile 18 für Räder 19 vorgesehen, die zur Hinterachse des Kraftfahrzeugs 2 gehören.

An der Unterseite 1 des Fahrzeugs ist eine Verkleidungsvorrichtung 20 angeordnet, die ein Verkleidungsteil 21 und eine Befestigungseinrichtung 22 aufweist, mit der das Verkleidungsteil 21 an der Unterseite 1 gehalten wird. Aus Fig. 1 ist ersichtlich, dass das Verkleidungsteil 21 den Motorraum 10 von der Unterseite 1 her abdeckt. Das Verkleidungsteil 21 erstreckt sich, entgegen der Fahrtrichtung Fr - bis unterhalb des Getriebes 11, und zwar vorzugsweise bis zum Getriebequerträger Gt. Das Verkleidungsteil 21 verjüngt sich - entgegen der Fahrtrichtung Fr gesehen - in seiner Breite B und ist somit an die Öffnungskontur des Motorraums 10 und an die Breite des Getriebes 11 angepasst. Außerdem ist die Breite B so gewählt, dass ein Mindestabstand zur Abgasanlage 7 gegeben ist. Ferner sind die Begrenzungsränder Br des Verkleidungsteils vorzugsweise an den Verlauf der Träger des Fahrschemels 12 angepasst. Insbesondere ist hierbei vorgesehen, dass das Verkleidungsteil 21 zwischen den Längsträgern 14 des Fahrschemels 12 in Richtung Unterseite 1 bzw. Unterboden des Fahrzeugs 2 bewegbar ist.

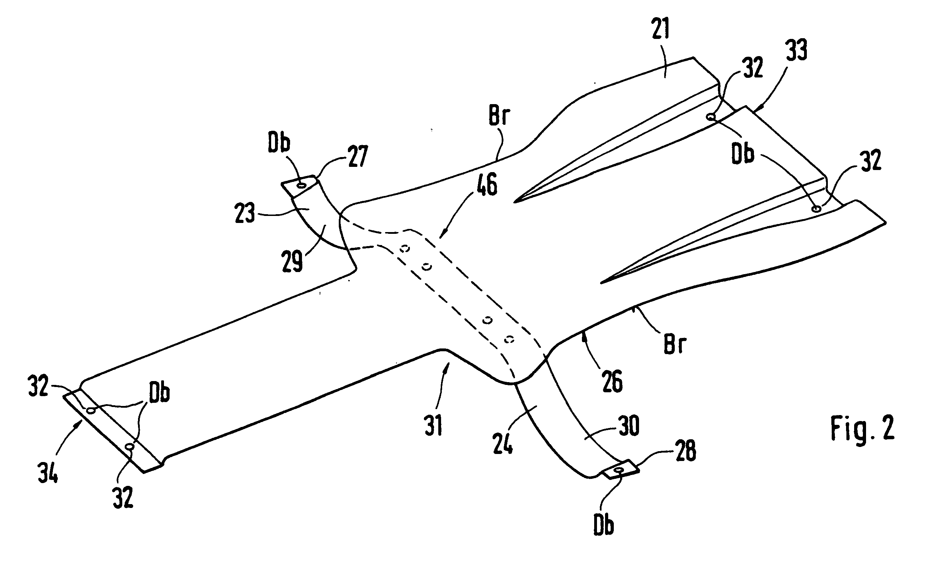

Die Befestigungseinrichtung 22 für das Verkleidungsteil 21 besitzt wenigstens ein Federelement 23 (Fig. 2), welches zwischen der Unterseite 1 und dem Verkleidungsteil 21 angeordnet ist. Das Federelement 23 ist erfindungsgemäß als Biegungsfeder 24, insbesondere Blattfeder, ausgebildet. Die Federkräfte des Federelements 23 wirken im Wesentlichen etwa rechtwinklig zur Ebene der Unterseite 1, so dass das Verkleidungsteil 21 mit Abstand zur Unterseite 1 liegt und entgegen der Kraft des Federelements 23 ausweichen kann.

Gemäß Fig. 2 ist die Blatt- bzw. Biegungsfeder 24 an der der Unterseite 1 zugewandten Innenseite 26 des Verkleidungsteils 21 befestigt. Die Biegungsfeder 24 erstreckt sich quer, insbesondere rechtwinklig, zur Fahrtrichtung Fr sowie etwa parallel zur Unterseite 1 und ragt über die seitlichen Begrenzungsränder Br des Verkleidungsteils 21 hervor. An den über die Ränder Br überstehenden Enden 27 und 28 besitzt die Biegungsfeder 24 jeweils zumindest einen gebogenen Federbereich 29, 30 der an seinem freien Ende Befestigungsmittel oder Durchbrüche Db für den Durchgriff von Befestigungsmitteln (nicht dargestellt) aufweist, damit das Verkleidungsteil 21 an der Unterseite 1 angebracht werden kann. Die gebogenen Federbereiche 29 und 30 übergreifen die Längsträger 14 des Fahrschemels 12 zwischen Unterseite 1 und Fahrschemel 12, so dass die freien Enden 27 und 28 der Biegungsfeder 24 an der Unterseite 1 befestigt werden können. Natürlich kann sich die Biegungsfeder 24 (Fig.1) mit ihren Enden 27 und 28 an den Längsträgern Lt des Rahmes bzw. der Bodengruppe 6 abstützen. Das Federelement 23, gemäß Fig. 2 die Biegungsfeder 24, ist etwa mittig im Bereich des Stufenübergangs 31 des Verkleidungsteils 21 befestigt, das sich also entgegen der Fahrtrichtung Fr, vorzugsweise stufenartig, verjüngt. Die Befestigungseinrichtung 22 besitzt beispielsweise weitere Befestigungsmittel 32, die beispielsweise im Bereich des vorderen Endes 33 und hinteren Endes 34 an dem Verkleidungsteil 21 ausgebildet sein können oder an diesem angreifen. Hierfür können ebenfalls Durchbrüche Db vorgesehen werden. Im Bereich des vorderen Endes 33 sind die Befestigungsmittel 32 vorzugsweise durch starre Befestigungsmittel, wie beispielsweise eine Schraube oder dgl., gebildet, die Durchbrüche Db durchgreifen und in den Fahrschemel 12 oder die Unterseite 1 eingeschraubt sind. Insbesondere ist vorgesehen, dass das Verkleidungsteil 21 an seinem vorderen Ende 33 mittels starrer Befestigungsmittel an der Unterseite 1, vorzugsweise einem Träger, beispielsweise Längsträger Lt oder Querträger, des Rahmens bzw. der Bodengruppe 6 befestigt ist. Alternativ kann das Verkleidungsteil 21 an dem Fahrschemel 12, beispielsweise an einem der Querträger 13, gehalten werden.

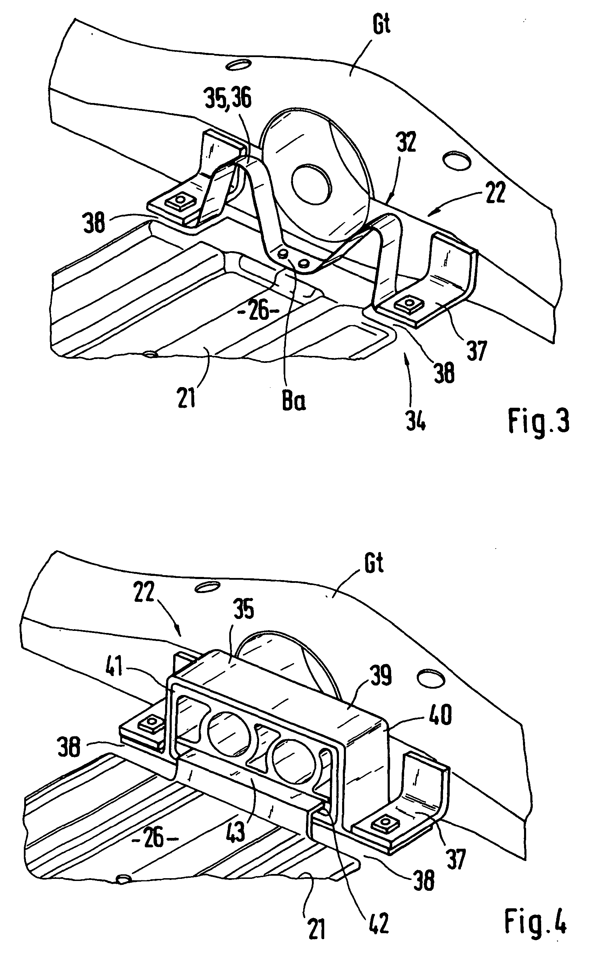

Am hinteren Ende 34 des Verkleidungsteils 21 kann als Befestigungsmittel 32 zumindest ein zweites Federelement 35 (Fig. 3) vorgesehen sein, welches an der Innenseite 26 des Verkleidungsteils 21 anliegt oder dort festgelegt ist. Das zweite Federelement 35 ist hier beispielsweise als etwa M-förmig gebogene Blattfeder 36 ausgebildet, welche mit ihrer Basis Ba an dem Verkleidungsteil 21 befestigt ist. Die freien Enden des Federelements 35 sind an der Unterseite 1, insbesondere an dem Getriebequerträger, festgelegt, an dem hierfür Befestigungslaschen 37 vorgesehen sind, an deren freien Enden die freien Enden der Blattfeder 36 angebracht sind. Damit das Verkleidungsteil 21 an den Befestigungslaschen 37 vorbeibewegt werden kann, sind an den Ecken des Verkleidungsteils 21 Ausnehmungen 38 vorgesehen.

Gemäß einem weiteren Ausführungsbeispiel, welches in Fig. 4 dargestellt ist, ist das zweite Federelement 35 der Befestigungseinrichtung 22 als elastisch verformbares Dämpfungselement 39 realisiert, das einen Rahmen 40 besitzt, der ein Verformungselement 41 umgreift, welches eine Aufnahme 42 aufweist, in die ein Befestigungsende 43 des Verkleidungsteils 21 eingesteckt wird. Das Verformungselement 41 besteht beispielsweise aus einem verformbaren und/oder komprimierbaren (geschäumten) Werkstoff.

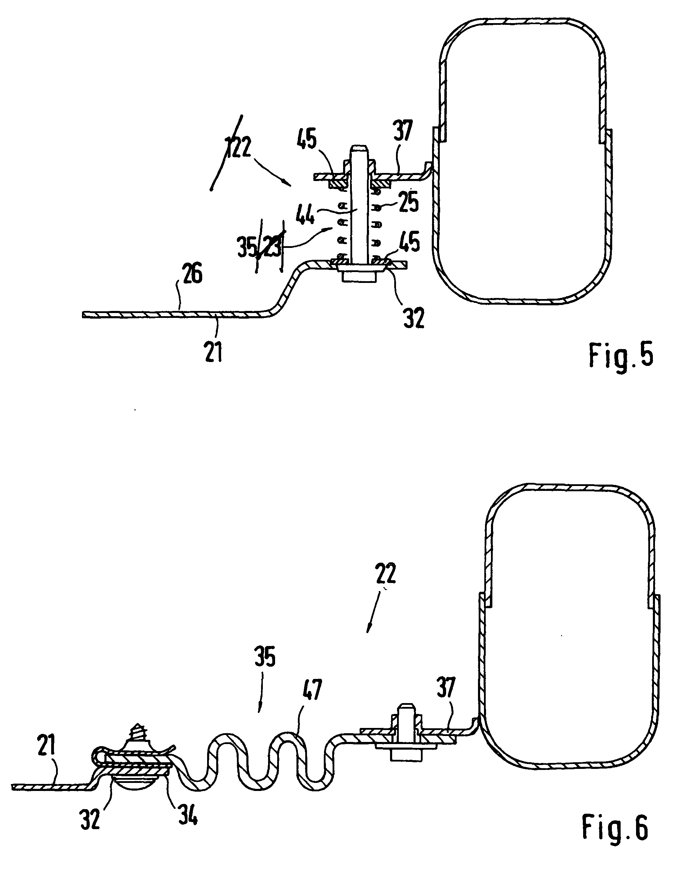

Beim Ausführungsbeispiel gemäß Fig. 5 des zweiten Federelement der Befestigungseinrichtung 22 ist zwischen der Befestigungslasche 37 und der Innenseite 26 des Verkleidungsteils 21 die Druckfeder 25 angeordnet, durch die eine Befestigungsschraube 44 hindurchgreift, die an der Befestigungslasche 37 festgelegt ist. Die Druckfeder 25 stützt sich vorzugsweise an Ringscheiben 45 ab, die an den aneinander zugewandt liegenden Flächen der Befestigungslasche 37 und des Verkleidungsteils 21 liegen. Vorzugsweise sind zwei Druckfedern 25 vorgesehen, die in Fahrzeugquerrichtung nebeneinander angeordnet sein können.

Bei einem Ausführungsbeispiel einer Befestigungseinrichtung 22 gemäß Fig. 6 ist als zweites Federelement 35 ein flexibles Zwischenstück 47 vorgesehen, welches mit dem hinteren Ende 34 des Verkleidungsteils 21 und der Befestigungslasche 37 verbunden ist. Das flexible Element 47 kann mäanderförmig gebogen verlaufen und an seinen geraden Enden mit dem Verkleidungsteil 21 und der Befestigungslasche 37, insbesondere durch Schrauben, verbunden sein.

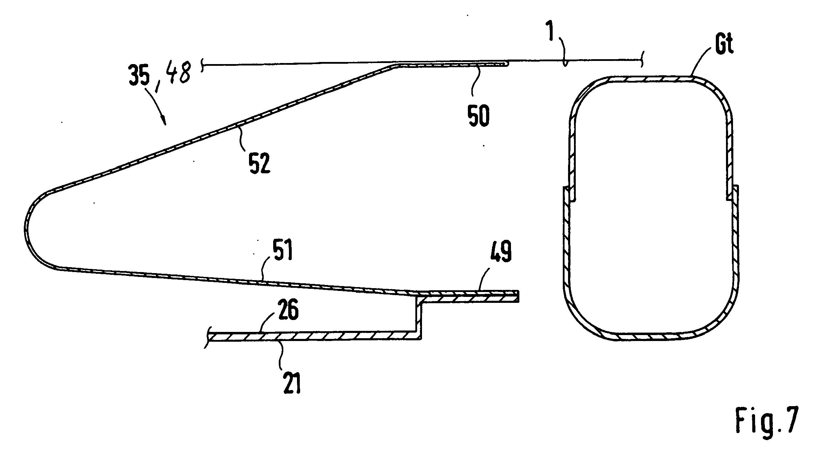

Das in Fig. 7 abgebildete Ausführungsbeispiel eines zweiten Federelements 35, das als Blattfeder 48 realisiert und etwa V-förmig gebogen ist, ist mit seinen freien Enden 49 und 50 einerseits am Verkleidungsteil 21 und andererseits an der Unterseite 1 oder an dem Getriebequerträger Gt festgelegt. Die Blattfeder 48 ist beispielsweise so ausgerichtet, dass ihre Federschenkel 51 und 52 etwa in oder quer zur Fahrtrichtung Fr liegen. Vorzugsweise sind zwei Blattfedern 48 für das Federelement 35 vorgesehen, die in Fahrzeugquerrichtung nebeneinander liegen können.

Das Verkleidungsteil 21 ist mittels der Befestigungseinrichtung 22 also derart an der Unterseite 1 des Fahrzeugs 2 befestigt, das es in Richtung zur Unterseite 1 hin ausweichen kann, wenn ein Hindernis überfahren bzw. das Fahrzeug in einem Gelände mit weichem Untergrund einsinkt und somit die Unterseite 1 mit diesem weichen Untergrund in Berührung kommt. Das insbesondere als aerodynamische Verkleidung wirkende Verkleidungsteil 21 wird durch die elastische Aufhängung mittels der Befestigungseinrichtung 22 vor Beschädigung geschützt, da es in Richtung der Unterseite 1 bzw. in Richtung des Getriebes 11 und der in dem Motorraum 10 angeordneten Brennkraftmaschine ausweichen kann.

Bei einem bevorzugten Ausführungsbeispiel umfasst die Verkleidungsvorrichtung 20 ein zusätzliches vorderes Verkleidungsteil 53 (Fig. 1), das in Fahrtrichtung Fr vor dem Verkleidungsteil 21 an der Unterseite 1 angeordnet ist. Es kann sich von einem unteren Stoßfänger- bzw. Karosserieende 54 bis zum vorderen Ende 33 des Verkleidungsteils 21 erstrecken. Vorzugsweise überlappen sich das vordere Ende 33 und das Verkleidungsteil 53 in definiertem Umfang, so dass mit den Befestigungsmitteln 32 beide Verkleidungsteile 21 und 53 gehalten werden. Zusätzlich besteht die Möglichkeit, das Verkleidungsteil 53 mit dem Stoßfänger- bzw. Karosserieende 54 zu verbinden. Denkbar ist jedoch auch, das vordere Verkleidungsteil 53 mit der Befestigungseinrichtung 22 bzw. 122 an der Unterseite 1 und/oder dem Fahrschemel 12 und/oder dem Ende 54 zu befestigen. Vorzugsweise werden für die Befestigung des vorderen Verkleidungsteils 53 jedoch starre Befestigungsmittel, beispielsweise Schrauben, verwendet.

Die beschriebenen Befestigungseinrichtungen 22 können auch für andere bzw. weitere Verkleidungsteile Verwendung finden, die an anderen Stellen der Unterseite 1 angebracht werden können. Das Verkleidungsteil 21 kann sich auch über weitere Bereiche der Unterseite 1 erstrecken. Die Befestigungslaschen 37 können im Übrigen auch an der Bodengruppe 6 angebracht werden.

Die Verkleidungsteile 21 und 53 bilden eine aerodynamische Abdeckung für die Unterseite 1. Insbesondere das vordere Verkleidungsteil 53 kann aus einem festen Material, wie Metall, hergestellt und als Unterfahrschutz ausgebildet sein. Für eine Minderung des Fahrzeugaußengeräusches können die Verkleidungsteile 21 und 53 an ihrer der Unterseite 1 zugewandten Innenfläche eine Geräuschdämmung aufweisen.

## Patentansprüche

1. Kraftfahrzeug (2) mit einer Verkleidungsvorrichtung (20), die ein Verkleidungsteil (21) und eine an der Unterseite (1) des Kraftfahrzeugs (2) anbringbare Befestigungseinrichtung (22) für das Verkleidungsteil (21) aufweist, welche Befestigungseinrichtung (22) wenigstens ein zwischen der Unterseite (1) und dem Verkleidungsteil (21) angeordnetes Federelement (23) besitzt, das als eine Biegungsfeder (24) ausgeführt ist, die sich quer zur Fahrtrichtung (Fr) des Fahrzeugs (2) erstreckt, deren Federkräfte (23) etwa rechtwinklig zur Unterseite (1) wirken und die an der Unterseite (1) befestigt ist, **dadurch gekennzeichnet, dass** die Biegungsfeder (24) wenigstens zwei gebogene Federbereiche (28, 29) aufweist, die einen an der Unterseite (1) befestigten Fahrschemel (12) übergreifen.

2. Kraftfahrzeug nach Anspruch 1, **dadurch gekennzeichnet, dass** das Federelement (23) als Blattfeder ausgebildet ist.

3. Kraftfahrzeug nach Anspruch 2, **dadurch gekennzeichnet, dass** die Blattfeder (24) zwischen, vorzugsweise etwa mittig, einem ersten und zweiten Ende (33, 34) des Verkleidungsteils (21) befestigt ist.

4. Kraftfahrzeug nach Anspruch 1 und 3, **dadurch gekennzeichnet, dass** das Verkleidungsteil (21) mit seinem einem Ende (33) mittels eines starren Befestigungselements (32) am Fahrschemel (12) oder an der Unterseite (1) oder einem Rahmenträger, beispielsweise Längsträger (Lt), befestigt ist, und dass die Blattfeder (24) - in Fahrtrichtung (Fr) gesehen - hinter dem starren Befestigungselement (32) angeordnet ist.

5. Kraftfahrzeug nach Anspruch 4, **dadurch gekennzeichnet, dass** das andere Ende (34) des Verkleidungsteils (21) an einem Getriebequerträger (Gt) oder der Unterseite (1), vorzugsweise über wenigstens ein zweites Federelement (35) oder ein elastisches Dämpfungselement (39), befestigt ist.

6. Kraftfahrzeug nach Anspruch 1, **dadurch gekennzeichnet, dass** sich das Verkleidungsteil (21) unterhalb einer Brennkraftmaschine und eines Getriebes (11) des Kraftfahrzeugs (2) erstreckt.

7. Kraftfahrzeug nach Anspruch 1, **dadurch gekennzeichnet, dass** das Verkleidungsteil (21) - entgegen der Fahrtrichtung (Fr) gesehen - sich in seiner Breite (B), vorzugsweise stufenartig, verjüngend ausgebildet ist.

8. Kraftfahrzeug nach Anspruch 1, **dadurch gekennzeichnet, dass** die Biegungsfeder (24) an der der Unterseite (1) zugewandten Innenseite (26) des Verkleidungsteils (21) befestigt ist.

9. Kraftfahrzeug nach Anspruch 1, **dadurch gekennzeichnet, dass** die Befestigungseinrichtung (22) wenigstens ein zweites Federelement (35) oder ein elastisch verformbares Dämpfungselement (39) aufweist.

10. Kraftfahrzeug nach Anspruch 9, **dadurch gekennzeichnet, dass** das zweite Federelement (35) als Schraubenfeder (25) ausgebildet ist, die sich einerseits an der Innenseite (26) des Verkleidungsteils (21) und andererseits an der Unterseite (1) des Fahrzeugs (2) abstützt.

11. Kraftfahrzeug nach Anspruch 9, **dadurch gekennzeichnet, dass** das Dämpfungselement (39) aus einem geschäumten Werkstoff hergestellt ist und zwischen der Innenseite (26) des Verkleidungsteils (21) und der Unterseite (1) angeordnet ist.

12. Kraftfahrzeug nach Anspruch 9, **dadurch gekennzeichnet, dass** das zweite Federelement (35) als wenigstens eine Biegungsfeder, insbesondere Blattfeder (36, 48) oder Druckfeder (25) ausgebildet ist.

## Claims

1. Motor vehicle (2) with a covering device (20), which comprises a covering part (21) and a fastening device (22) for the covering part (21) which may be attached to the underside (1) of the motor vehicle (2), which fastening device (22) has at least one spring element (23) arranged between the underside (1) and the covering part (21) which is designed as a bending spring (24) which extends transversely to the direction of travel (Fr) of the vehicle (2), the spring force (23) thereof acting approximately at right angles to the underside (1), and which is fastened to the underside (1), **characterized in that** the bending spring (24) comprises at least two bent spring regions (28, 29) which engage over a subframe (12) fastened to the underside (1).

2. Motor vehicle according to Claim 1, **characterized in that** the spring element (23) is configured as a leaf spring.

3. Motor vehicle according to Claim 2, **characterized in that** the leaf spring (24) is fastened, preferably approximately centrally, between a first and second end (33, 34) of the covering part (21).

4. Motor vehicle according to Claims 1 and 3, **characterized in that** the covering part (21) is fastened with its one end (33) by means of a rigid fastening element (32) to the subframe (12) or to the underside (1) or a frame member, for example a longitudinal member (Lt), and **in that** the leaf spring (24) - viewed in the direction of travel (Fr) - is arranged behind the rigid fastening element (32).

5. Motor vehicle according to Claim 4, **characterized in that** the other end (34) of the covering part (21) is fastened to a transmission crossmember (Gt) or the underside (1), preferably via at least one second spring element (35) or an elastic damping element (39).

6. Motor vehicle according to Claim 1, **characterized in that** the covering part (21) extends below an internal combustion engine and a transmission (11) of the motor vehicle (2).

7. Motor vehicle according to Claim 1, **characterized in that** the covering part (21) - viewed counter to the direction of travel (Fr) - is configured to be tapering in its width (B), preferably in a step-like manner.

8. Motor vehicle according to Claim 1, **characterized in that** the bending spring (24) is fastened to the inside (26) of the covering part (21) facing the underside (1).

9. Motor vehicle according to Claim 1, **characterized in that** the fastening device (22) comprises at least one second spring element (35) or an elastically deformable damping element (39).

10. Motor vehicle according to Claim 9, **characterized in that** the second spring element (35) is configured as a coil spring (25) which, on the one hand, is supported on the inside (26) of the covering part (21) and, on the other hand, on the underside (1) of the vehicle (2).

11. Motor vehicle according to Claim 9, **characterized in that** the damping element (39) is produced from a foamed material and is arranged between the inside (26) of the covering part (21) and the underside (1).

12. Motor vehicle according to Claim 9, **characterized in that** the second spring element (35) is configured as at least one bending spring, in particular a leaf spring (36, 48) or pressure spring (25).

## Revendications

1. Véhicule automobile (2), avec un dispositif d'habillage (20) qui présente un élément d'habillage (21) et un système de fixation (22) pour l'élément d'habillage (21) qui peut être monté sur le dessous (1) du véhicule automobile (2) et qui possède au moins un élément de ressort (23) disposé entre le dessous (1) et l'élément d'habillage (21), qui est réalisé sous la forme d'un ressort de flexion (24) qui s'étend transversalement à la direction de marche (Fr) du véhicule automobile (2), dont les forces de ressort (23) agissent environ perpendiculairement au dessous (1) et qui est fixé sur le dessous (1), **caractérisé en ce que** le ressort de flexion (24) présente au moins deux régions de ressort cintrées (28, 29) qui recouvrent un cadre auxiliaire (12) fixé sur le dessous (1).

2. Véhicule automobile selon la revendication 1, **caractérisé en ce que** l'élément de ressort (23) est réalisé sous forme de ressort à lame.

3. Véhicule automobile selon la revendication 2, **caractérisé en ce que** le ressort à lame (24) est fixé, de préférence environ centralement, entre une première extrémité (33) et une deuxième extrémité (34) de l'élément d'habillage (21).

4. Véhicule automobile selon les revendications 1 et 3, **caractérisé en ce que** l'élément d'habillage (21) est fixé par l'une (33) de ses extrémités au moyen d'un élément de fixation rigide (32) sur le cadre auxiliaire (12) ou sur le dessous (1) ou sur un élément porteur de châssis, par exemple un longeron (Lt), et **en ce que** le ressort à lame (24) est disposé - considéré dans la direction de marche (Fr) - après l'élément de fixation rigide (32).

5. Véhicule automobile selon la revendication 4, **caractérisé en ce que** l'autre extrémité (34) de l'élément d'habillage (21) est fixée sur une traverse de boîte (Gt) ou sur le dessous (1), de préférence par l'intermédiaire d'au moins un deuxième élément de ressort (35) ou d'un élément d'amortissement élastique (39).

6. Véhicule automobile selon la revendication 1, **caractérisé en ce que** l'élément d'habillage (21) s'étend en dessous d'un moteur à combustion interne et d'une boîte de vitesses (11) du véhicule automobile (2).

7. Véhicule automobile selon la revendication 1, **caractérisé en ce que** l'élément d'habillage (21) est réalisé - considéré à l'encontre de la direction de marche (Fr) - en se rétrécissant dans sa largeur (B), de préférence de manière étagée.

8. Véhicule automobile selon la revendication 1, **caractérisé en ce que** le ressort de flexion (24) est fixé sur le côté intérieur (26) de l'élément d'habillage (21) qui est tourné vers le dessous (1).

9. Véhicule automobile selon la revendication 1, **caractérisé en ce que** le système de fixation (22) présente au moins un deuxième élément de ressort (35) ou un élément d'amortissement (39) élastiquement déformable.

10. Véhicule automobile selon la revendication 9, **caractérisé en ce que** le deuxième élément de ressort (35) est réalisé sous forme de ressort hélicoïdal (25), qui s'appuie d'une part contre le côté intérieur (26) de l'élément d'habillage (21) et d'autre part contre le dessous (1) du véhicule automobile (2).

11. Véhicule automobile selon la revendication 9, **caractérisé en ce que** l'élément d'amortissement (39) est fabriqué en un matériau moussé et est disposé entre le côté intérieur (26) de l'élément d'habillage (21) et le dessous (1).

12. Véhicule automobile selon la revendication 9, **caractérisé en ce que** l'élément de ressort (35) est réalisé sous la forme d'au moins un ressort de flexion, notamment de ressort à lame (36, 48) ou de ressort de pression (25).
